# EUROPÄISCHE PATENTANMELDUNG

(11) **EP 2 218 652 A1**
(43) Veröffentlichungstag der Anmeldung: **18.08.2010**
(21) Anmeldenummer: 09002194.0
(22) Anmeldetag: 17.02.2009
(51) Int. Cl.: B65D 65/46, B65D 85/804

(54) **Maschinell lesbare, vollständig biologisch abbaubare Verpackung für die Zubereitung von Getränken**

(71) Anmelder: Wons, Uwe, 8006 Zürich (CH)
(72) Erfinder: Wons, Uwe, 8006 Zürich (CH)

(57) **Zusammenfassung**

Die vorliegende Erfindung beschreibt eine geschlossene, aromadichte, sauerstoffundurchlässige Portionspackung, die mit einer oder mehreren zu extrahierenden Substanzen gefüllt ist und zur Herstellung eines Getränkes in diversen auf dem Markt bereits existierenden Gerätetypen verwendet wird. Diese Einzelpackung ist nach Gebrauch zusammen mit dem verbleibenden Restinhalt vollständig biologisch abbaubar, da sie ausschliesslich aus kompostierbaren oder anderweitig umweltfreundlich verwertbaren Werkstoffen hergestellt wird. Es besteht ausserdem die Option, diese Portionspackung mit einer unsichtbaren sowie mit mindestens einem der verwendeten Werkstoffe fest verbundenen, elektromagnetischen Kennzeichnung zu versehen, um über eine Sensorfunktionseinheit berührungslos den Typ der Portionspackung elektronisch erkennen zu können, damit das Extraktionsgerät mit dieser Information vollautomatisch die optimale Extraktionsprozedur aktivieren kann. Diese unsichtbare, fälschungssichere Markierung dient dem Markenschutz.

## Beschreibung

Die vorliegende Erfindung betrifft eine vollständig biologisch abbaubare, ausschliesslich aus kompostierbaren oder biotechnologisch verwertbaren Werkstoffen hergestellte, aromadichte, sauerstoffundurchlässige Verpackung, die aus einer aus Biokunststoff oder Biokunststoff-Verbundwerkstoffkombination hergestellten, starren oder halbstarren Schale, welche im wesentlichen aus einer kegelstumpfförmigen Seitenwand mit einem an der verjüngten Kegelstumpfseite nach aussen kugelsegmentförmig angesetzten Schalenboden, der eine am Scheitelpunkt oder am Rand inwandig fixierte, kreisförmige non-woven Faserschicht enthalten kann, die ein Austreten von fester Substanz bei Öffnung der Verpackung an dieser Stelle verhindert, sowie einem an der gegenüberliegenden Seite kreisförmig ausgebildeten Flasch oder einer anderen Versteifung aufgebaut ist, und aus einer mit dem Flansch bzw. der Versteifung luftdicht verbundenen Verschlussmembran, die entweder aus einem Papier/Biokunststoff-Verbundwerkstoff oder anderen Bioverbundwerkstoffkombinationen besteht, starr, halbstarr oder flexibel ausgeführt ist, nicht planeben sein muss, aber durchaus sein kann und im Fall der flexiblen Eigenschaft eine nach aussen gewölbte Vorspannung aufweisen kann, zusammengesetzt und mit einer oder mehreren zu extrahierenden Substanzen gefüllt ist, die so komplettiert für die Zubereitung eines Getränkes in einer Getränkezubereitungsmaschine oder in einem Getränkezubereitungsautomaten unter Zuführung von unter Druck stehendem, heissen Wasser ihre Verwendung findet sowie insbesondere das umweltfreundliche Merkmal einer rein biologischen Entsorgungsmöglichkeit aufweist, sodass die gesamte Verpackung mit ihrem Restinhalt nach Gebrauch durch Kompostierung, Biovergasung oder Bioverdieselung in ihre natürlichen Einzelbestandteile zurückführt und damit höheren Pflanzen als Nährstoff wieder zur Verfügung steht, womit der biologische Kreislauf geschlossen wird, ohne dass dabei die Umwelt belastende Schadstoffe entstehen oder zurückbleiben können sowie ferner kein wertvoller Sekundärrohstoff wie zum Beispiel sehr stromintensiv unter strombedingter Treibhausgasemmission hergestelltes Aluminium in grossen Mengen nach und nach auf Mülldeponien verstreut oder in Müllverbrennungsanlagen vernichtet einem fortlaufenden Recycling-, Produktions- und Nutzungsprozess auf Dauer verloren geht, wobei diese vorgenannte Portionspackung eine zusätzliche Vorrichtung enthalten kann, die die Funktion einer unsichtbaren, eindeutigen Markierung erfüllt, aus einem glasgekapselten Legierungsfaden von der Dicke eines menschlichen Haares oder aus anderen elektromagnetisch lesbaren Komponenten besteht, innerhalb eines der verwendeten Verpackungswerkstoffe fest eingebunden oder mittels eines mit dieser elektromagnetisch lesbaren Vorrichtung hergestellten Mittels an der Portionspackung in- oder aussenwandig fest angebracht ist und über eine elektronische Sensorfunktionseinheit berührungslos elektromagnetisch ausgelesen und elektronisch ausgewertet werden kann.

Es ist bekannt, mittels Extraktion unter Zugabe von unter Druck stehendem Heisswasser ein Getränk aus einer Portionskapsel herzustellen, die mit einer oder mehreren Substanzen gefüllt ist, wie in den Patentschriften DE 27 52 733, EP 0 844 195, EP 1 165 398, WO 00/56629 und EP 1 190 959 beschrieben. Neben den hier erwähnten Kapseln aus Plastikmaterial werden für die Getränkezubereitung vorrangig Einwegkapseln aus Aluminium verwendet. Um diese nach Gebrauch umweltgerecht aufarbeiten zu können, müssen diese Aluminiumkapsein zusammen mit dem Rest der Extraktion vom Endverbraucher separat gesammelt und über eine aufwendige Rückführungskette zum Hersteller oder zu einem Recycling-Unternehmen gebracht werden. Dies ist für den Kunden sehr umständlich, wobei es zu bezweifeln bleibt, dass sich alle Kunden diesem durch den Hersteller angebotenen Recyclingprogramm auf Dauer anschliessen.

Mit dem Begriff Recycling bzw. Rezyklierung wird der Vorgang bezeichnet, bei dem aus Abfall Sekundärrohstoffe werden, also aus dem anfallenden Zivillsationsmüll Ausgangs- bzw. Werkstoffe für neue Produkte erzeugt werden. So wird in der internationalen Patentschrift WO 2005/006927 (EP 1 646 304) beschrieben, für die Einwegkapseln zur Getränkezubereitung nur rezyklierbares Plastikmaterial zu verwenden, wenn auch der Patentinhaber auf seiner nationalen wie internationalen Internetseite für die umweltgerechte Entsorgung durch Verbrennung zusammen mit gewöhnlichem Haushaltsabfall wirbt, wodurch aus diesen Kapseln neben Wasser das Treibhausgas Kohlendioxid (CO₂) entsteht.

Die internationale Patentschrift WO 02/28241 beschreibt ein kodiertes Kaffeebrühpaket, das mit 8 verschiedenen, aussen sichtbar angebrachten, optischen, maschineninterpretierbaren Kennzeichnungen versehen ist, die dazu verwendet werden können, die Extraktionsgeräte automatisch anzuweisen, spezifische Extraktionsprogramme für den jeweils erkannten Brühpakettyp anzuwenden. Diese optischen Kennzeichnungen sind nicht fälschungssicher und daher für den Markenschutz ungeeignet. Gleiches gilt auch für die in DE 101 16 239 und DE 20121494 beschriebenen rotationssymmetrischen Barcodes zur maschinell lesbaren Kennzeichnung von Portionseinheiten.

In Anbetracht der vorgenannten Nachteile besteht ein Ziel dieser Erfindung darin, eine zeitgemäss umweltfreundliche Portionsverpackung gefüllt mit einer oder mehreren Substanzen zur Herstellung eines Getränkes zu realisieren, die nach erfolgtem Extraktionsvorgang samt ihrem Restinhalt ausschließlich auf biologischem Weg mittels Kompostierung oder anderer umweltfreundlicher Verfahren (Biotechnologien) vollständig in ihre natürlichen Einzelbestandteile zurückgeführt wird, ohne dass dabei die Umwelt belastende Schadstoffe entstehen oder zurückbleiben können sowie ferner ohne wertvolle Sekundärrohstoffe wie das in der Verpackungsindustrie am häufigsten zur Anwendung kommende Aluminium zu verwenden.

Ein weiteres Ziel dieser Erfindung besteht darin, die unter Absatz [0005] beschriebenen kompostierbaren oder biotechnologisch abbaubaren Werkstoffe aus der Gruppe biologisch erzeugter Werkstoffe auszuwählen, da diese weitgehend CO₂-neutral sind. Diese Gruppe der bio-basierten Werkstoffe umfasst Biokunststoffe und Biokunststoff-Verbundwerkstoffe, die aus von Mikroorganismen erzeugten und/oder nachwachsenden Rohstoffen bestehen. Es ist ein Anliegen dieser Erfindung, die Verwendung von biologisch abbaubaren, Erdöl-basierten Werkstoffen soweit als möglich einzuschränken, da Erdöl wegen dessen zunehmender Verknappung und seines steigenden Preises nicht mehr als zeitgemässe Rohstoffquelle anzusehen ist, und weil Erdöl-basierte Werkstoffe die CO₂-Bilanz der Erfindung verschlechtern würde.

Ein Ziel dieser Erfindung ist es ferner, die vorgenannte Portionspackung mit einer benutzerfreundlichen, lebensmittelsicheren, unsichtbaren und berührungslos elektromagnetisch lesbaren Markierung zu versehen, durch die das Extraktionsgerät vollautomatisch den Typ der Portionspackung erkennt und dementsprechend das für diesen Typ vorgegebene Extraktionsablaufprogramm aktiviert, um damit ein optimal zubereitetes Getränk zu erhalten.
Diese unsichtbare, fälschungssichere Markierung kann einen gewünschten Markenschutz realisieren.

## Patentansprüche

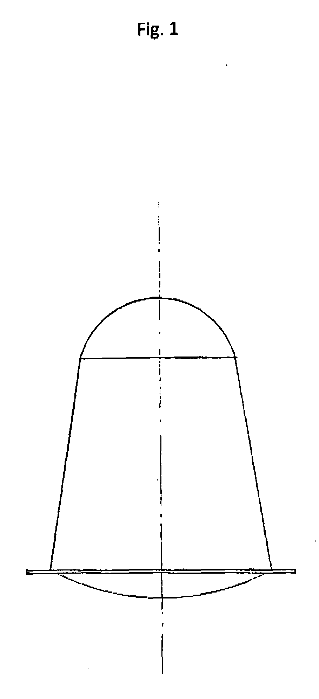

1. Geschlossene, aromadichte, sauerstoffundurchlässige Verpackung (Fig.1), die aus einer starren oder halbstarren Schale, welche im wesentlichen aus einer kegelstumpfförmigen Seitenwand mit einem an der verjüngten Kegelstumpfseite nach aussen kugelsegmentförmig angesetzten Schalenboden, der eine am Scheitelpunkt oder am Rand inwandig fixierte, kreisförmige non-woven Faserschicht enthalten kann, die ein Austreten von fester Substanz bei Öffnung der Verpackung an dieser Stelle wirkungsvoll verhindert, sowie einem an der gegenüberliegenden Seite kreisförmig ausgebildeten Flasch oder einer anderen Versteifung aufgebaut ist, und aus einer mit dem Flansch bzw. der Versteifung luftdicht verbundenen Verschlussmembran, die entweder aus einer nichtkunststoffbeschichteten und/oder metallisierten Biokunststofffolie, oder aus einem mehrlagigen Biokunststofffolienverbund, der eine oder mehrere nichtkunststoffgeartete Beschichtungen bzw. Metallisierungen eines dieser Typen oder in Kombination beider Typen enthalten kann, oder aus einem Papier/Biokunststoff- bzw. einem Zellutose/Biokunststoff-Verbundwerkstoff mit oder ohne nichtkunststoffgeartete Beschichtung und/oder Metallisierung besteht, starr, halbstarr oder flexibel ausgeführt ist, nicht planeben sein muss, aber durchaus sein kann, im Fall der flexiblen Eigenschaft eine nach aussen gewölbte Vorspannung aufweisen und nur aufgrund der Wirkung der Kraft der unter Druck stehenden Extraktionsflüssigkeit entsprechend der Formgebung des flüssigkeitsdurchlässigen Gegenstückes des verwendeten Extraktionsgerätes vordefiniert zerreissen kann, zusammengesetzt und mit einer oder mehreren zu extrahierenden Substanzen gefüllt ist, die so komplettiert für die Zubereitung eines Getränkes oder eines flüssigen Nahrungsmittels in einer Getränkezubereitungsmaschine oder in einem Getränkezubereitungsautomaten unter Zuführung von unter Druck stehendem, heissen Wasser ihre Verwendung findet, **dadurch gekennzeichnet, dass** diese Verpackung ausschliesslich aus kompostierbaren oder anderweitig umweltfreundlich verwertbaren Werkstoffen hergestellt und zusammen mit ihrem Inhalt sowohl vor als auch nach Gebrauch vollständig biologisch abbaubar ist, wobei diese durch Kompostierung, Biovergasung, Bioverdieselung oder andere umweltfreundliche Verfahren in ihre natürlichen Einzelbestandteile zurückführt und damit zum Beispiel höheren Pflanzen als Nährstoff wieder zur Verfügung steht oder in Form von Biogas oder Biodiesel als ökologischer Energieträger nutzbar ist, womit der biologische Kreislauf geschlossen wird, ohne dass dabei die Umwelt belastende Schadstoffe entstehen oder zurückbleiben können sowie ferner kein wertvoller Sekundärrohstoff wie zum Beispiel sehr stromintensiv unter strombedingter Treibhausgasemmission hergestelltes Aluminium in grossen Mengen nach und nach auf Mülldeponien verstreut oder in Müllverbrennungsanlagen vernichtet einem fortlaufenden Recycling-, Produktions- und Nutzungsprozess auf Dauer verloren geht.

2. Verpackung nach Anspruch 1, **dadurch gekennzeichnet, dass** die Verpackungsschale und die mit ihrer Versteifung luftdicht verbundene Verschlussmembran entweder aus einer nichtkunststoffbeschichteten und/oder metallisierten Biokunststofffolie oder aus einem mehrlagigen Biokunststofffolienverbund, der eine oder mehrere nichtkunststoffgeartete Beschichtungen bzw. Metallisierungen eines dieser Typen oder in Kombination beider Typen enthalten kann, oder aus einem Papier/Biokunststoff-Verbundwerkstoff oder anderen Bio-Verbundwerkstoffen mit oder ohne nichtkunststoffgeartete Beschichtung und/oder Metallisierung besteht.

3. Verpackung nach Anspruch 1 und 2, **dadurch gekennzeichnet, dass** bei Vorhandensein einer kreisförmigen non-woven Faserschicht diese am Schalenboden nur punktförmig fixiert ist, damit neben dem Rückhalt von fester Substanz nach Öffnen der Verpackung der grössere Teil dieser non-woven Faserschicht frei beweglich auch für die gleichmässige Verteilung der in die Verpackung einströmenden Extraktionsflüssigkeit während des Extraktionsvorganges sorgt.

4. Verpackung nach Anspruch 1, 2 und 3, **dadurch gekennzeichnet, dass** diese Verpackung in beiden möglichen Strömungsrichtungen mittels der unter Druck stehenden, heissen Extraktionsflüssigkeit extrahiert werden kann, also durch Flüssigkeitseintritt an der geöffneten Schale und Getränkeaustritt an der inzwischen geöffneten Verschlussmembran oder aber in entgegengesetzter Strömungsrichtung, das heisst durch Flüssigkeiteintritt an der mechanisch geöffneten Verschlussmembran und Getränkeaustritt an dem mechanisch geöffneten, kugelsegmentförmigen Schalenboden.

5. Verpackung nach Anspruch 1, 2, 3 und 4, **dadurch gekennzeichnet, dass** die in dieser Verpackung zu extrahierende Substanz für die Cremabildung eine Vorpressung bzw. Verdichtung aufweisen kann.

6. Verpackung nach Anspruch 1, 2, 3 und 4, **dadurch gekennzeichnet, dass** diese Verpackung zur besseren Aromaerhaltung neben ihrer zu extrahierenden Substanz anstatt der Luft ein Schutzgas enthalten kann.

7. Geschlossene Portionspackung aromadicht gefüllt mit einer oder mehreren Substanzen für die Zubereitung von Getränken in Maschinen oder Automaten mittels Zuführung von unter Druck stehendem Heisswasser, **dadurch gekennzeichnet, dass** diese Portionspackung eine zusätzliche Vorrichtung enthält, die die Funktion einer unsichtbaren, eindeutigen Markierung erfüllt, aus einem glasgekapselten Legierungsfaden von der Dicke eines menschlichen Haares oder aus anderen elektromagnetisch lesbaren Komponenten besteht, innerhalb eines der verwendeten Verpackungswerkstoffe fest eingebunden oder mittels eines speziell mit dieser elektromagnetisch lesbaren Vorrichtung hergestellten Mittels an dieser Portionspackung in- oder aussenwandig fest angebracht ist und hierfür vorzugsweise das bekannte Warensicherungssystem lockfor^{®} der Schweizer Firma Sellcor GmbH zum Einsatz kommt.

8. Portionspackung nach Anspruch 7, **dadurch gekennzeichnet, dass** diese zusätzliche Vorrichtung über eine elektronische Sensorfunktionseinheit berührungslos elektromagnetisch ausgelesen und derart ausgewertet wird, dass das Extraktionsgerät vollautomatisch den Typ der Portionspackung erkennt und dementsprechend das für diesen Typ vorgegebene Extraktionsablaufprogramm aktiviert, um damit ein optimal zubereitetes Getränk zu erhalten, oder aber bei gänzlichem Fehlen dieses Auswertesignales aufgrund der Verwendung von markenfremden No-Name-Portionspackungen ohne diese unsichtbare, zusätzliche Vorrichtung das Extraktionsgerät aus Markenschutzgründen die Getränkequalität gezielt beeinträchtigen kann.
